# EUROPEAN PATENT SPECIFICATION

(11) **EP 0 786 966 B1**
(45) Date of publication and mention of the grant of the patent: **03.05.2006**
(21) Application number: 95933862.5
(22) Date of filing: 18.09.1995
(51) Int. Cl.: A61C 8/00

(54) **SUPPORT POST FOR USE IN DENTAL IMPLANT SYSTEM**
TRÄGERPFOSTEN FÜR EIN ZAHNIMPLANTATSYSTEM
PIVOT SUPPORT DESTINE A UN SYSTEME D'IMPLANT DENTAIRE

(43) Date of publication of application: 06.08.1997
(73) Proprietor: IMPLANT INNOVATIONS, INC., Palm Beach Gardens, Florida 33410 (US)
(72) Inventor: BEATY, Keith, D., Jupiter, FL 33469 (US); LAZZARA, Richard, J., Lake Worth, FL 33460 (US)
(74) Representative: Grünecker, Kinkeldey, Stockmair & Schwanhäusser Anwaltssozietät
(86) International application number: PCT/US1995/011918
(87) International publication number: WO 1997/010770

(56) References cited:
- US-A- 5 087 200
- US-A- 5 125 839
- US-A- 5 447 435

## Description

### BACKGROUND OF THE INVENTION

This invention relates to a support post for use with a bone-embedded dental implant. Specifically, the invention relates to a support post which is made of a material having different properties from the material of the implant with which it is to be used, and which includes an interface made of material compatible in hardness, with the material of the implant with which it is to be used and which is radiopaque. Such support posts support a prosthesis superstructure such as an artificial tooth.

In the US Patent US 5 087 200 a spacer for dental implants is revealed. The spacer for dental implants therein is of a bio-compatible material. The spacer includes an inner sleeve-shaped spacer element titanium which is part of a screw connection between an anchorage element, called fixture, implanted in the maxillary beneath the gingiva, and a dental prosthesis construction, the joined surface of which is located above the gingiva and which is disposed to absorb the loading of the screw connection. The spacer further includes an outer spacer sleeve of porcelain ceramics which wholly or partly encloses the inner sleeve-like spacer element. The ceramic or porcelain sleeve may, by grinding and coating with porcelain of different colours, by caused by visually approximate a dental cervix and gingiva, and thereby, not contrast with the natural dental cervix colour and gingiva colour to the same extent as the titanium material**.**

Of the US Patent US 5 447 435 upon which prior art the two part for of claim 1 is based, a device for the reconstruction of missing or lost teeth, an implant, which ends in the gingival region, being biologically anchored in the jaw bone is known of. This implant itself comprises an implant body anchored in the jaw bone and an implant head on the gingival aspect, acting as the anchoring site for an abutment, which in tum forms the reception site for the tooth being reconstructed. The abutment represents the retention shape of the tooth being reconstructed.

Surgical techniques for support of dental prostheses by means of metallic bone-embedded artificial root fixtures are well known. According to one prior art technique, a titanium bone-embedded implant fixture is interfaced with a metallic abutment post, on which the superstructure is supported. The post has an internally shouldered access bore through which a screw fastener is inserted to actually hold the implant and the post assembled. A number of problems and restrictions are presented however in the attachment of and retention of the superstructures to such abutment posts.

Specifically, the typical superstructures for use with such posts are made of porcelain. The use of a titanium post generally results in a dark, central rod-like shadow, particularly when exposed to high-brightness light, which makes the prosthesis somewhat unattractive and able to be distinguished from a natural tooth. Further, since the materials are different, there are sometimes presented problems with securing of the prosthesis to the support post.

One attempt to solve the attractiveness and securing problems has involved making a support post made entirely of ceramic material, specifically, aluminum oxide. This approach allows direct surface bonding by interaction of a porcelain coping and/or prosthesis to the support post resulting in a secure and almost seamless bond between the prosthetic structure and the support post. While presenting an alternative attraction to the use of a titanium support post, the proposed solution presents a number of previously unanticipated problems.

Ceramic materials generally have a much greater hardness than titanium. When such a support post is used, inevitable rocking of the support post due to, for example, chewing action, causes a high-stress interaction between the metal implant and the ceramic material of the post. Since ceramic is of greater hardness than the titanium implant, it can and does cause damage to the implant. If sufficient damage is caused, eventual surgical intervention is required to remove and replace the titanium implant. In addition, ceramic material is typically not radiopaque. Thus, when examining the juncture between the support post and the titanium implant through conventional dental x-ray imaging, the interface between the two elements is not readily viewable and thus adequate x-ray examination cannot be conducted.

These and other problems relating to the use of an all-ceramic support post are avoided by the support post of the invention as described hereafter.

### SUMMARY OF THE INVENTION

In accordance with one aspect of the invention, there is provided an improved support post for use with a dental implant for supporting a prosthesis thereon as specified in claim 1. The support post may include an implant-contacting region such as trans-tissue region integral with the post. A supragingival core section extends from the implant or from the implant-contacting region, such as a trans-tissue region, for supporting a prosthesis thereon. An interface member is secured to the post at least at the juncture between the post or the trans-tissue region, if present, for abutment between the post, or the trans-tissue region, and an implant to which the post is to be secured. The interface member has material properties different from those from which the support post is made.

In a more specific aspect, the support post is made of a material having greater hardness than the implant with which it is to be used and the interface member is made of a material having a hardness no greater than the implant with which it is to be used. Preferably, the interface member is opaque to x-rays. The support post is of ceramic material and more preferably the interface member is of the same material as the implant with which it is to be used, e.g., titanium.

In a yet still more specific aspect, the support post is hollow with a passageway extending therethrough and the interface member is an insert which is press-fitted in the passageway. The insert preferably extends completely along the bottom surface of the support post to prevent contact between the harder material of the support post and an implant with which it is to be used. Optionally, the insert further includes an upper portion extending coaxially within the passageway in contact with the inner walls of the support post defining the passageway. The support post includes a shoulder portion extending centrally from the inner walls to provide a shoulder for the head of the screw for use in securing the support post to an implant.

### BRIEF DESCRIPTION OF THE DRAWINGS

Having generally described the invention, the same will become, better understood from the following detailed discussion made with reference to the attached drawings wherein:
FIG. 1 is a side cross-sectional view of a typical prior an support post;
FIG. 2 is a view as in FIG. 1 showing a support post with a modification including an interface member in accordance with the invention;
FIG. 3 is a perspective view of one embodiment of the interface member employed in connection with the support post in accordance with the invention;
FIG. 4 is a side-cross sectional view showing a typical arrangement of one embodiment of the support post of the invention with the interface member shown assembled to a dental implant in a typical construction;

### DETAILED DISCUSSION

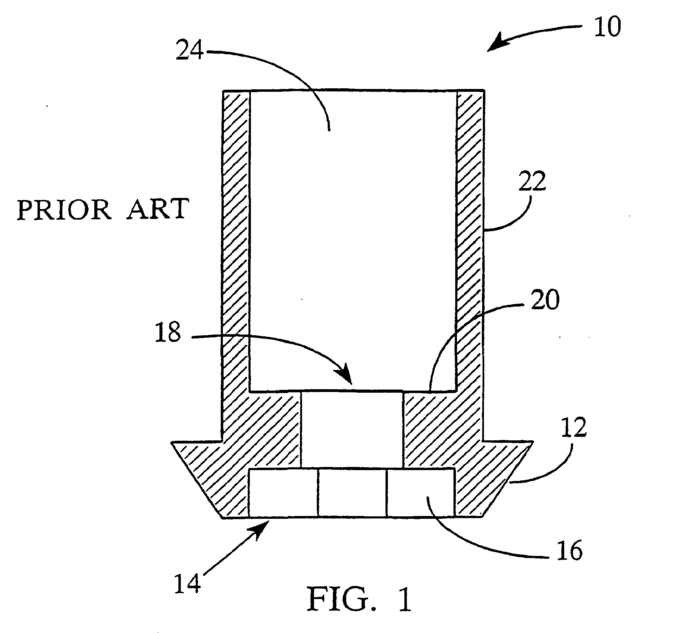

Referring now to the drawings in detail, FIG. 1 illustrates generally as element 10 a support post in accordance with the prior art. The support post 10 includes an opening 14 at the bottom thereof extending into a passageway 24 which extends upwardly to an open top. The passageway 24 includes at the bottom a shaped region 16, for example, having a multiple flat sides in a generally circular arrangement to prevent rotation of the support post 10 when in abutment and attached to an implant having a corresponding shaped upper member which fits into the shaped region 16. The passageway 24 narrows through a narrower portion 18 with shoulder regions 20 providing a shoulder for the head of a screw which is used to secure the support post 10 to a dental implant. Transgingival region 12 provides a region which is, when attached to an implant, surrounded by the gingival tissue of a patient.

An upper-elongated portion 22 of the support post is shaped for having a prosthesis, optionally with a coping, secured thereto by any one of a number of different means.

In accordance with the prior art, in one aspect the prior art the support post is made of titanium which includes all of the disadvantages heretofore discussed with respect to securing a prosthesis thereto and with respect to the unattractive appearance given to the prosthesis by virtue of the dark shadow left by the elongated portion 22 in the center of the prosthesis. In an alternative configuration of the prior art, the support post 10 of FIG. 1 can be made of all ceramic material such as aluminum oxide, as shown. However, as discussed with reference to such a support post, the ceramic material is of greater hardness than the implants with which it is to be used, and can damage the implant requiring later surgical intervention due to rocking motion of the support post 10 on the implant fixture. Further, ceramic is x-ray radiation transparent thereby not permitting adequate x-ray examination of the interface between the bottom of the support post 10 and the titanium implant with which it is used when secured to an implant in a patient's mouth.

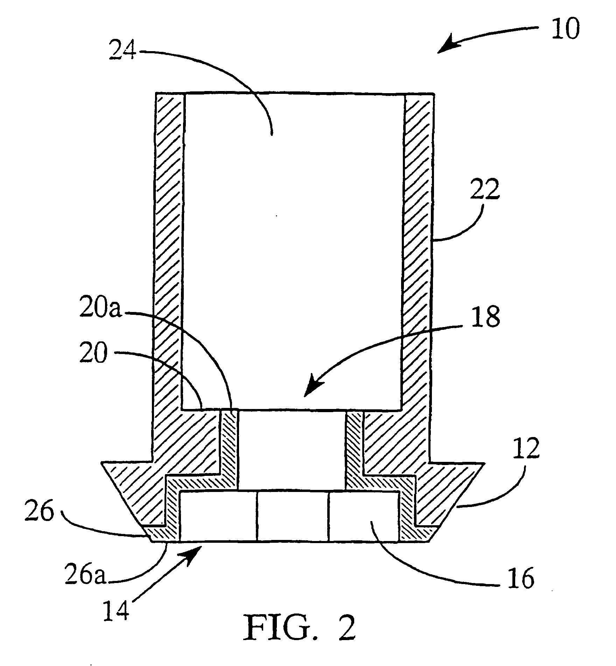

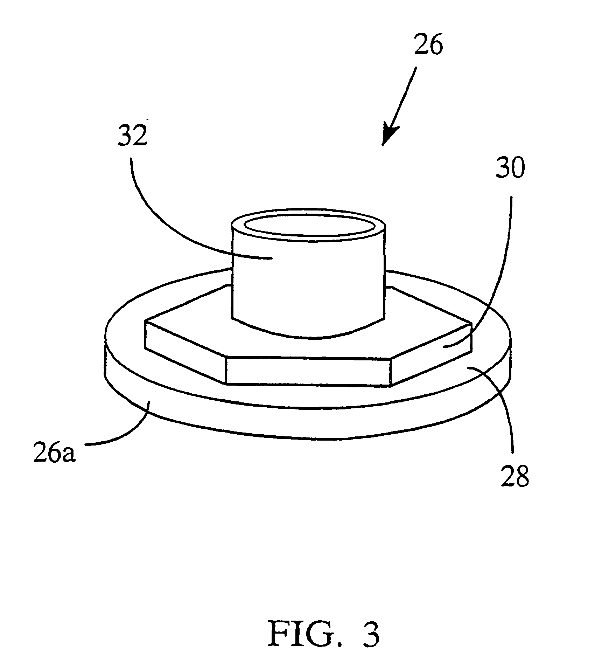

FIG. 2 shows one embodiment of the invention which employs the ceramic structure shown in FIG. 1, except that an insert 26 is provided to create an interface between the support post 10 and the implant with which it is used to prevent direct contact between the ceramic material of the support post and the dental implant. Specifically, as shown in FIG. 2, and more clearly in FIG. 3, the insert 26 includes a wide-bottom portion 28 having a lower surface 26a which is coextensive with the bottom surface of support post 10. An upwardly extending narrower-shaped region 30 corresponds to shaped region 16 of the passageway 24 of the support post 10. and fits therein in a non-rotational manner with the inner surface of raised portion 30 including corresponding flat-shaped portions for non-rotational engagement with the appropriate portion of the implant with which it is used. A narrower tubular section 32 fits into narrower passageway 18 and the top edge of the tubular section 32 defines an optional additional shoulder portion 20a for abutment with the head of a screw used to hold the support post 10 attached to an implant.

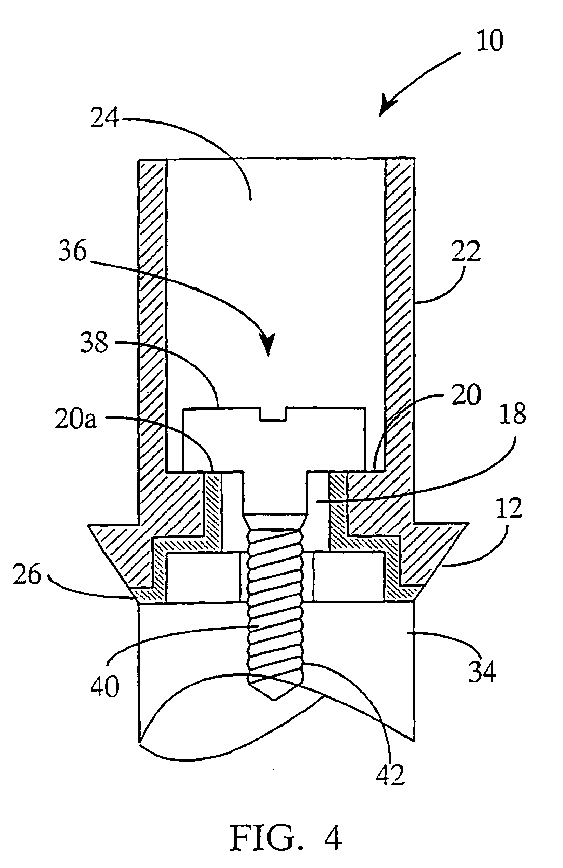

Such an arrangement of this embodiment of the support post 10 is shown in assembled form with an implant 34 in FIG. 4. Specifically, the implant 34, typically made of titanium or titanium alloy, includes a threaded bore 42 for having a screw received therein. The support post 10 is placed in abutment with implant 32 through interface member 26 and is held secured to the implant 34 by means of a screw 36 having a head 38 which rests against shoulders 20/20a with the threaded portion 40 of the screw in threaded engagement with threaded receiving bore 42 of the implant.

Thus, it will be appreciated by persons skilled in the art that various deviations from the described embodiments of the invention are possible and that many modifications and improvements may be made within the scope thereof. It will be understood that the invention is not limited by the specific embodiments described herein, but only by scope of the appended claims.

## Claims

1. A support post (10) for use with a dental implant (34), said dental implant (34) having an internally threaded bore (42) therein and said implant being substantially located below an exterior surface of the gingiva and contacting a jawbone, said support post comprising:
a ceramic portion adapted to support a prosthesis thereon, said ceramic portion having a supragingival region for protruding beyond said gingiva and a subgingival end below said supragingival region, said ceramic portion having a passageway (24) extending therethrough;
a screw (36) adapted to engage threads of said internally threaded bore (42) in said implant and insertable through said passageway (24), said screw comprising a head (38) and a threaded section (40); and
a metal portion comprising a lower section and an upper section extending into said passageway (24), said metal portion abutting said subgingival end of said ceramic portion,
whereby said lower section is adapted to mate with a corresponding non-round fitting located at a gingival end portion of said dental implant (34), said metal portion having an opening (14) to provide access of said screw (36),
**characterized in that**
said upper section having an uppermost surface remaining entirely below said head (38) of said screw (36).

2. The support post (10) of claim 1, wherein said lower section of said metal portion has a flange, a supragingival region of said ceramic portion engages said flange, said ceramic portion has a generally tubular top section that surrounds said upper section of said metal portion.

3. A support post (10) according to one of the foregoing claims, wherein said uppermost surface of said upper section defines a shoulder (20a) for engaging said head (38) of said screw (36).

4. The support post (10) according to one of the foregoing claims, wherein said passageway (24) of said ceramic portion narrows to define a shoulder (20a) for engaging said head (38) of said screw (36).

5. The support post (10) according to one of the foregoing claims, wherein said uppermost surface of said upper section defines a first shoulder (20a) and said passageway (24) of said ceramic portion narrows to define a second shoulder (20), said first and said second shoulders adapted to engage said head (38) of said screw (36).

6. The support post (10) according to one of the foregoing claims, wherein said metal portion is made of titanium or titanium alloy.

7. The support post (10) according to one of the foregoing claims, wherein the hardness of the material used in forming said metal portion is not greater than the hardness of the material used in forming said dental implant (34).

8. The support post (10) according to one of the foregoing claims, wherein said metal portion and said dental implant (34) are made from the same material.

9. The support post (10) according to one of the foregoing claims, wherein said lower section of said metal portion comprises a flange and a polygonal section.

10. The support post (10) according to one of the foregoing claims, wherein said flange has an exterior surface, said exterior surface tapering inwardly toward said dental implant (34).

11. The support post (10) according to one of the foregoing claims, wherein said subgingival end of said ceramic portion has an outer surface generally following a contour of said exterior surface of said flange.

12. The support post (10 according to one of the foregoing claims, wherein said upper section of said metal portion is generally tubular.

13. The support post (10) according to one of the foregoing claims, wherein said upper section of said metal portion defines a shoulder (20a) for engaging said head (38) of said screw (36).

14. The support post (10) according to one of the foregoing claims, wherein said head (38) of said screw (36) further engages a surface of said ceramic portion.

15. The support post (10) according to one of the foregoing claims, wherein said fitting of said metal portion is adapted to mate with a hexagon.

16. The support post (10) according to one of the foregoing claims, wherein an end of said subgingival region of said ceramic portion has an outer surface generally following a contour of said exterior surface of said flange.

## Patentansprüche

1. Tragestütze (10) zum Einsatz mit einem Zahnimplantat (34), wobei das Zahnimplantat (34) eine mit Innengewinde versehene Bohrung (42) aufweist, das Implantat im Wesentlichen unterhalb einer Außenfläche der Gingiva angeordnet ist und mit einem Kieferknochen in Kontakt kommt und die Tragestütze umfasst:
einen Keramikabschnitt, der so eingerichtet ist, dass er eine Prothese trägt, wobei der Keramikabschnitt einen supragingivalen Bereich, der über die Gingiva vorsteht, sowie ein subgingivales Ende unterhalb des supragingivalen Bereichs hat und der Keramikabschnitt einen Durchlass (24) hat, der sich durch ihn hindurch erstreckt;
eine Schraube (36), die so eingerichtet ist, dass sie mit Gewindegängen der mit Innengewinde versehenen Bohrung (42) in dem Implantat in Eingriff kommt und über den Durchlass (24) eingeführt werden kann, wobei die Schraube einen Kopf (38) und einen mit Gewinde versehenen Abschnitt (40) umfasst; und
einen Metallteil, der einen unteren Abschnitt und einen oberen Abschnitt umfasst, die sich in den Durchlass (24) hinein erstrecken, wobei der Metallteil an dem subgingivalen Ende des Keramikabschnitts anliegt,
wobei der untere Abschnitt so eingerichtet ist, dass er mit einem entsprechenden nicht runden Verbindungsstück in Eingriff kommt, das an einem gingivalen Endabschnitt des Zahnimplantats (34) angeordnet ist, und der Metallabschnitt eine Öffnung (14) hat, die Zugang zu der Schraube (36) ermöglicht,
**dadurch gekennzeichnet, dass**
der obere Abschnitt eine oberste Fläche hat, die vollständig unter dem Kopf (38) der Schraube (36) bleibt.

2. Tragestütze (10) nach Anspruch 1, wobei der untere Abschnitt des Metallteils einen Flansch hat, ein supragingivaler Bereich des Keramikteils mit dem Flansch in Eingriff kommt und der Keramikteil einen im Allgemeinen röhrenförmigen oberen Abschnitt hat, der den oberen Abschnitt des Metallteils umgibt.

3. Tragestütze (10) nach einem der vorangehenden Ansprüche, wobei die oberste Fläche des oberen Abschnitts eine Schulter (20a) zum Eingriff mit dem Kopf (38) der Schraube (36) bildet.

4. Tragestütze (10) nach einem der vorangehenden Ansprüche, wobei der Durchlass (24) des Keramikabschnitts sich verschmälert und eine Schulter (20a) zum Eingriff mit dem Kopf (38) der Schraube (36) bildet.

5. Tragestütze (10) nach einem der vorangehenden Ansprüche, wobei die oberste Fläche des oberen Abschnitts eine erste Schulter (20a) bildet und sich der Durchlass (24) des Keramikteils verschmälert und eine zweite Schulter (20) bildet, wobei die erste und die zweite Schulter so eingerichtet sind, dass sie mit dem Kopf (38) der Schraube (36) in Eingriff kommen.

6. Tragestütze (10) nach einem der vorangehenden Ansprüche, wobei der Metallteil aus Titan oder Titanlegierung besteht.

7. Tragestütze (10) nach einem der vorangehenden Ansprüche, wobei die Härte des Materials, das beim Ausbilden des Metallteils verwendet wird, nicht größer ist als die Härte des Materials, das beim Ausbilden des Zahnimplantats (34) verwendet wird.

8. Tragestütze (10) nach einem der vorangehenden Ansprüche, wobei der Metallteil und das Zahnimplantat (34) aus dem gleichen Material bestehen.

9. Tragestütze (10) nach einem der vorangehenden Ansprüche, wobei der untere Abschnitt des Metallteils einen Flansch und einen vieleckigen Abschnitt umfasst.

10. Tragestütze (10) nach einem der vorangehenden Ansprüche, wobei der Flansch eine Außenfläche hat und sich die Außenfläche nach innen auf das Zahnimplantat (34) zu verjüngt.

11. Tragestütze (10) nach einem der vorangehenden Ansprüche, wobei das subgingivale Ende des Keramikteils eine Außenfläche hat, die im Wesentlichen einer Kontur der Außenfläche des Flansches folgt.

12. Tragestütze (10) nach einem der vorangehenden Ansprüche, wobei der obere Abschnitt des Metallteils im Allgemeinen röhrenförmig ist.

13. Tragestütze (10) nach einem der vorangehenden Ansprüche, wobei der obere Abschnitt des Metallteils eine Schulter (20a) zum Eingriff mit dem Kopf (38) der Schraube (36) bildet.

14. Tragestütze (10) nach einem der vorangehenden Ansprüche, wobei der Kopf (38) der Schraube (36) des Weiteren mit einer Fläche des Keramikteils in Eingriff kommt.

15. Tragestütze (10) nach einem der vorangehenden Ansprüche, wobei das Verbindungsstück des Metallteils so eingerichtet ist, dass es mit einem Sechskant in Eingriff kommt.

16. Tragestütze (10) nach einem der vorangehenden Ansprüche, wobei ein Ende des subgingivalen Bereiches des Keramikteils eine Außenfläche hat, die im Allgemeinen einer Kontur der Außenfläche des Flansches folgt.

## Revendications

1. Montant de support (10) à utiliser avec un implant dentaire (34), ledit implant dentaire (34) comportant un alésage intérieurement fileté (42) et ledit implant étant sensiblement situé sous une surface extérieure de la gencive et en contact avec une mâchoire, ledit montant de support comprenant :
une partie céramique conçue pour y supporter une prothèse, ladite partie céramique possédant une région sus-gingivale pour s'avancer au-delà de ladite gencive et une extrémité sous-gingivale sous ladite région sus-gingivale, ladite partie céramique présentant un passage (24) s'étendant à travers celle-ci ;
une vis (36) conçue pour engager les filets dudit alésage intérieurement fileté (42) dans ledit implant et pouvant être insérée à travers ledit passage (24), ladite vis comprenant une tête (38) et une section filetée (40) ; et
une partie métallique comprenant une section inférieure et une section supérieure s'étendant dans ledit passage (24), ladite partie métallique étant contiguë à ladite extrémité sous-gingivale de ladite partie céramique,
moyennant quoi ladite section inférieure est conçue pour s'emboîter avec un raccord correspondant non rond situé au niveau d'une partie d'extrémité gingivale dudit implant dentaire (34), ladite partie métallique comportant une ouverture (14) pour donner accès à ladite vis (36),
**caractérisé par**
ladite section supérieure ayant une surface la plus élevée restant entièrement sous ladite tête (38) de ladite vis (36).

2. Montant de support (10) selon la revendication 1, dans lequel ladite section inférieure de ladite partie métallique comporte une collerette, une région sus-gingivale de ladite partie céramique engage ladite collerette, ladite partie céramique a une section supérieure globalement tubulaire qui entoure ladite section supérieure de ladite partie métallique.

3. Montant de support (10) selon l'une des revendications précédentes, dans lequel ladite surface la plus élevée de ladite section supérieure définit un épaulement (20a) pour engager ladite tête (38) de ladite vis (36).

4. Montant de support (10) selon l'une des revendications précédentes, dans lequel ledit passage (24) de ladite partie céramique se rétrécit pour définir un épaulement (20a) pour engager ladite tête (38) de ladite vis (36).

5. Montant de support (10) selon l'une des revendications précédentes, dans lequel ladite surface la plus élevée de ladite section supérieure définit un premier épaulement (20a) et ledit passage (24) de ladite partie céramique se rétrécit pour définir un second épaulement (20), lesdits premier et second épaulements étant conçus pour engager ladite tête (38) de ladite vis (36).

6. Montant de support (10) selon l'une des revendications précédentes, dans lequel ladite partie métallique est composée de titane ou d'alliage de titane.

7. Montant de support (10) selon l'une des revendications précédentes, dans lequel la dureté du matériau utilisé pour la formation de ladite partie métallique n'est pas supérieure à la dureté du matériau utilisé pour la formation dudit implant dentaire (34).

8. Montant de support (10) selon l'une des revendications précédentes, dans lequel ladite partie métallique et ledit implant dentaire (34) sont fabriqués à partir du même matériau.

9. Montant de support (10) selon l'une des revendications précédentes, dans lequel ladite section inférieure de ladite partie métallique comprend une collerette et une section polygonale.

10. Montant de support (10) selon l'une des revendications précédentes, dans lequel ladite collerette a une surface extérieure, ladite surface extérieure s'effilant vers l'intérieur vers ledit implant dentaire (34).

11. Montant de support (10) selon l'une des revendications précédentes, dans lequel ladite extrémité sous-gingivale de ladite partie céramique a une surface extérieure suivant globalement un contour de ladite surface extérieure de ladite collerette.

12. Montant de support (10) selon l'une des revendications précédentes, dans lequel ladite section supérieure de ladite partie métallique est globalement tubulaire.

13. Montant de support (10) selon l'une des revendications précédentes, dans lequel ladite section supérieure de ladite partie céramique définit un épaulement (20a) pour engager ladite tête (38) de ladite vis (36).

14. Montant de support (10) selon l'une des revendications précédentes, dans lequel ladite tête (38) de ladite vis (36) engage en outre une surface de ladite partie céramique.

15. Montant de support (10) selon l'une des revendications précédentes, dans lequel ledit raccord de ladite partie métallique est conçu pour s'emboîter avec un hexagone.

16. Montant de support (10) selon l'une des revendications précédentes, dans lequel une extrémité de ladite région sous-gingivale de ladite partie céramique a une surface extérieure suivant globalement un contour de ladite surface extérieure de ladite collerette.
